Europäisches Patentamt

European Patent Office

Office européen des brevets

(11) Publication number: **0 006 266**
**A1**

# EUROPEAN PATENT APPLICATION

(21) Application number: **79200290.9**

(22) Date of filing: **08.06.79**

(51) Int. Cl.³: **E 03 D 11/16**

(30) Priority: **09.06.78 DK 2605/78**

(43) Date of publication of application: **09.01.80**
**Bulletin 80/1**

(84) Designated Contracting States: **BE CH DE FR GB IT NL SE**

(71) Applicant: **WAVIN B.V, 251 Händellaan, NL-8031 EM Zwolle (NL)**

(72) Inventor: **Larsen, Christian, Stadionspladsen, DK 8883-Gjern (DK)**

(74) Representative: **Van der Veken, Johannes Adriaan et al, Willem Witsenplein 3 & 4, NL-2509 LP The Hague (NL)**

(54) **A pipe section for connecting to the ferule of a water closet.**

(57) Pipe section for connecting the ferule (7) of a water closet (6) and a horizontal conduit (9) opening into a vertical waste pipe (11). The pipe section makes a substantially 90° bend and the wall (3) has such a shape that the greater amount of sewage from the water closet (6) is cast at the bend in horizontal direction directly towards the waste pipe (11).

-1-

A pipe section for connecting to the ferule of a water closet.

The present invention relates to a pipe section for providing a connection between the closet ferule of a water closet and a substantially horizontal conduit in communication with a vertical waste pipe, said pipe section having a vertical symmetry plane, in which said pipe section forms a substantially $90^{\circ}$ short bend.

Various pipe sections are known which connect the ferule of a water closet with a conduit in communication with a waste pipe, said conduit often forming an acute angle to the waste pipe. In order to place a water closet where desired on an individual deck of a block of flats, the conduit leading to the waste pipe must extend horizontally in the deck and for this reason the connection between the ferule and such a horizontal conduit must comprise a $90^{\circ}$ bend. For this purpose a pipe section has been used with a so-called long bend, i.e. pipe sections that have a vertical symmetry plane, the inner portion of the bend of said pipe section having a radius of curvature in the symmetry plane of the same dimensions as the diameter of the pipe section itself. However, pipe sections with a shorter bend have also been used. A common problem with such pipe sections is, however, that the pipe section at the bend has a tendency to retard the flow of sewage with waste material, and consequently the waste material has a tendency to form a plug in the passage immediately beyond the bend, often filling up the entire cross section of the pipe. During its continued movement the plug may prevent air from passing and therefore has a tendency to draw all the water out of the water closet. This problem becomes especially great if the conduit leading to the waste pipe extends backward and away from the water closet, since the out-flowing sewage has a strong turbulent flow, which after passing the drain of the water closet will have a relatively small total velocity component in the bend that is directed forward under the water closet. This sewage must be given a direction of movement directly counteracting the forward-directed velocity component. For this reason certain authorities do not allow the horizontal conduit between the pipe section in question and the waste pipe to extend backward and away from the water closet, but only endorse conduits that extend forward within an angle of $75^{\circ}$ from their respective sides of the vertical symmetry plane of the water closet.

The pipe section according to the invention is characterized in that the pipe section wall forming the outer portion of the bend is shaped so that most of the sewage from the water closet

is cast at the head in horizontal direction directly towards the waste pipe. By this means a flow of sewage is achieved which does not simply follow a slight curve, thus reducing the velocity of the flow, but is thrown back at the bend in horizontal direction and is thereby given such a great horizontal velocity component, that clogging is prevented, even when the horizontal conduit extends backward and away from the water closet.

It is especially preferred according to the invention that the wall comprising the outer portion of the bend be made of parts of two or more cylindrical surfaces or cylinder-like surfaces, whose generatrices extend perpendicular to the symmetry plane of the pipe section.

Furthermore according to the invention the pipe section wall comprising the outer portion of the bend may be made of parts of two cylindrical surfaces, the first cylindrical surface being located nearest the horizontal part of the pipe section and having a centre of curvature which coincides approximately with the centre of curvature of the inner portion of the bend, and the radius of curvature of the second cylindrical surface being substantially larger, preferably about twice as large as the radius of curvature of the first cylindrical surface.

By this means a simply constructed pipe section is achieved which functions extremely effectively and which is relatively easy to manufacture.

Moreover, according to the invention the outer portion of the bend may comprise a curve of intersection with the vertical symmetry plane, so that both the transition between the horizontal part of the pipe section and the first cylindrical surface and the transition between the first and the second cylindrical surfaces are tangential, thus preventing cavities or recesses which may retard the flow of sewage.

The invention may be described below with reference to the accompanying drawings, in which

- Fig. 1 is a cross-sectional view of a pipe section according to the invention, which is co-extensive with the symmetry plane of the pipe section;
- Fig. 2 is a sectional view taken along the line I-I in Fig. 1 and
- Fig. 3 is a diagrammatic view of a pipe section according to the invention, mounted and in communication with the drainage system of a water closet in a deck.

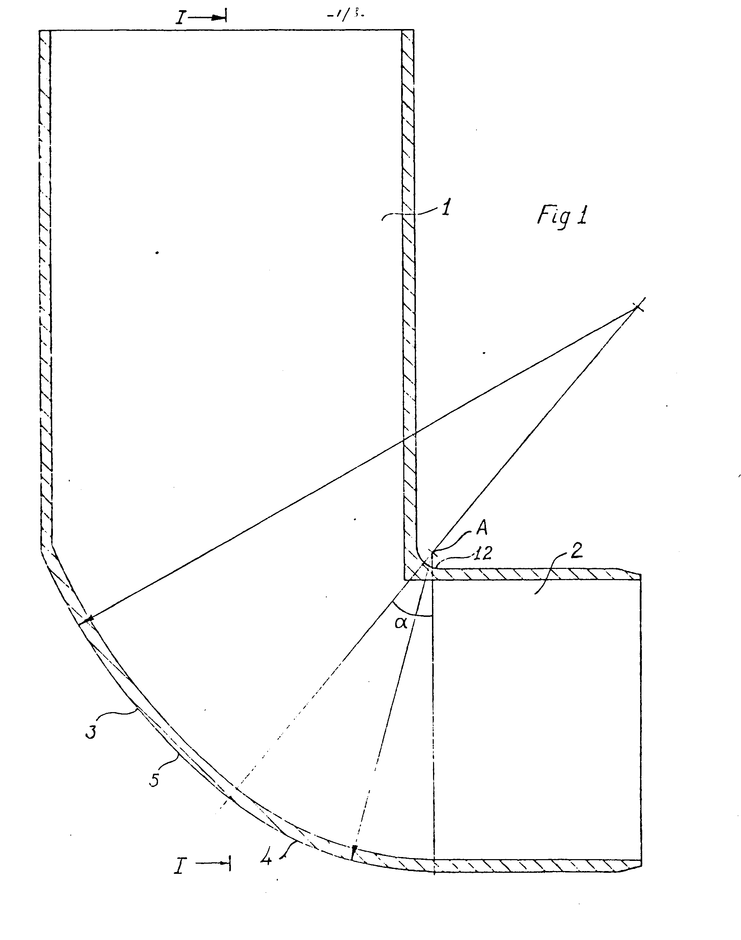

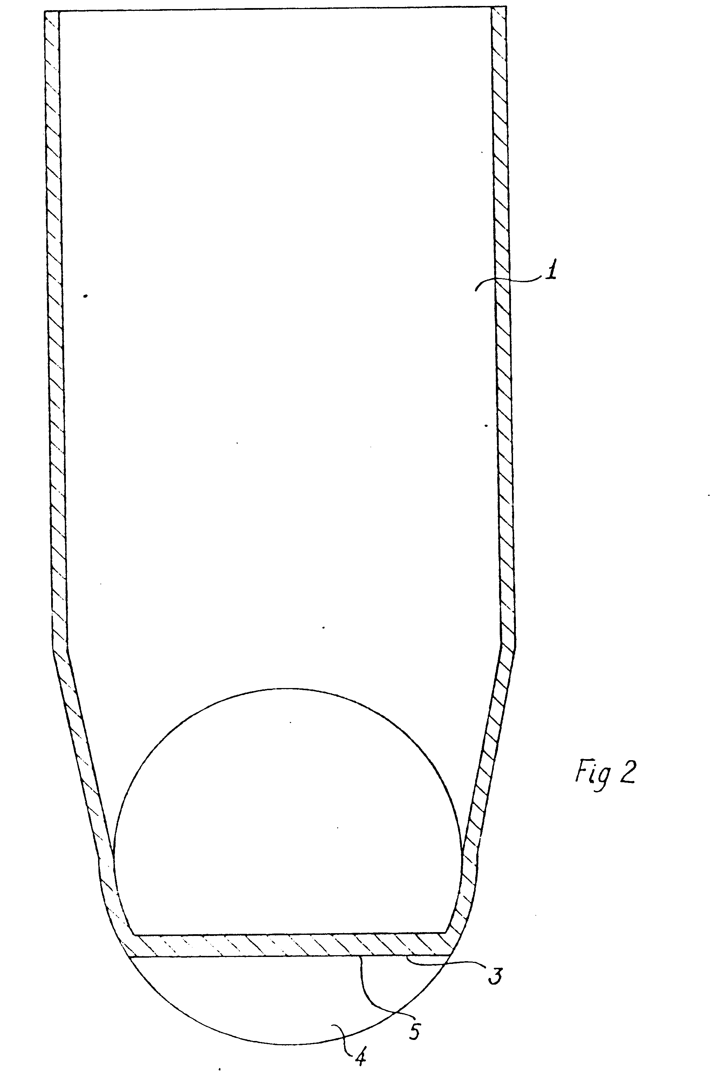

The pipe section shown in Fig. 1 has a vertical symmetry plane, in which said pipe section forms a substantially $90^{\circ}$ bend, and comprises a straight part 1 adapted to be mounted in vertical position and a straight part 2 adapted to be mounted in horizontal position. The inner portion 2 of the bend has a short radius of curvature, making the bend relatively short. As will be seen from Figs. 1 and 2, the outer portion or the back of the bend is made of parts of cylindrical surfaces, whose generatrices extend perpendicular to the symmetry plane. In this

-5-

way the outer portion 3 consists of a first cylindrical surface 4 with a centre of curvature A, that coincides approximately with the centre of curvature of the inner portion 2, and a second cylindrical surface 5, whose radius of curvature is twice as large as the radius of curvature of the first cylindrical surface.

A commonly used pipe section has a part 1 with a diameter of 110 mm adapted to be mounted in vertical position and a part 2 with a diameter of 90 mm adapted to be mounted in horizontal position. In such a pipe section the first cylindrical surface may have an angle $\alpha$ of approximately $40^{\circ}$ and a radius of 95 mm whereas the second cylindrical surface has a radius of curvature of 188.9 mm. The transition between the part adapted to be mounted in horizontal position and the first cylindrical surface as well as the transition between the first and second cylindrical surfaces are tangential, i.e. when mounted, the first cylindrical surface extends in the symmetry plane from a point located vertically below its centre of curvature and the centre of curvature of the second cylindrical surface in the symmetry plane is located on an extension of the radius of curvature of the first cylindrical surface, said radius being located adjacent the second cylindrical surface. The transition between the two straight parts of the pipe section is preferably made as smooth as possible, so that the cores used to manufacture the pipe section may be easily removed.

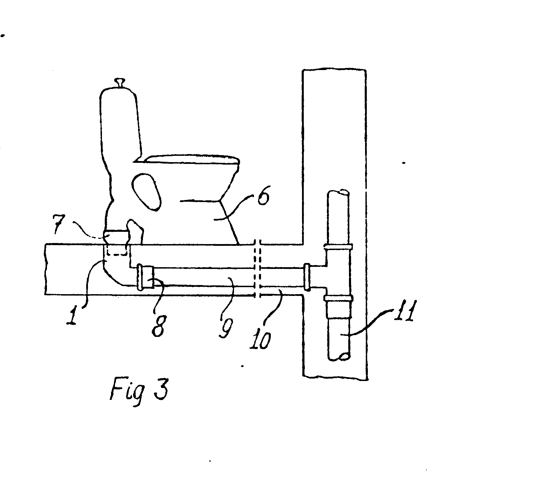

In Fig. 3 the pipe section according to the invention is mounted in communication with the drainage system of a water closet 6, the part 1 of the pipe section that is adapted to be mounted in vertical position, i.e. the vertical part of the pipe section, being connected to the ferule of the water closet, whereas the part 2 of the pipe section that is adapted to be mounted in horizontal position, i.e. the horizontal part of the pipe section, is connected through a connecting sleeve with a horizontal conduit 9, which in a deck 10 in a block of flats leads to a vertical waste pipe 11 in the wall of the building.

The invention has been described with reference to a special embodiment. Many changes may be made without deviating from the spirit and the scope of the invention as set forth in the appended claims. For example, the outer portion 2 of the bend may be made of parts of one or more other surfaces of revolution with generatrices, which are either straight lines or curves with a radius of curvature that is substantially larger than the radius of the pipe, and which extend perpendicular to the symmetry plane. The outer portion may possibly consist of absolutely plane surfaces. The area of flow within the bend may not be substantially narrower than the adjacent parts of the pipe section.

-1-

CLAIMS:

1.   A pipe section for providing a connection between the ferule (7) of a water closet (6) and a substantially horizontal conduit (9) in communication with a vertical waste pipe (11), said pipe section having a vertical symmetry plane, in which said pipe section makes a substantially 90° short bend, characterized in that the wall (3) comprising the outer portion of the bend has such a shape that the greatest amount of sewage from the water closet (6) is cast at the bend in horizontal direction directed towards the waste pipe (11).

2. A pipe section as claimed in claim 1, characterized in that the wall (3) comprising the exterior of the bend consists of parts of two or more cylindrical surfaces or cylinder-like surfaces (4, 5) whose generatrices extend perpendicular to the symmetry plane of the pipe section.

3.   A pipe section as claimed in claim 2, characterized in that the wall (3) comprising the outer portion of the bend consists of parts of two cylindrical surfaces (4, 5) of which the first cylindrical surface (4), located adjacent the horizontal part of the pipe section, has a centre of curvature (A) which coincides approximately with the centre of curvature of the inner portion (2) of the bend, and in that the radius of curvature of the second cylindrical surface (5) is substantially larger, preferably twice as large as the radius of curvature of the first cylindrical surface (4).

4.   A pipe section as claimed in claim ?, characterized in that the outer portion (^) of the bend forms a curve of intersection with the vertical symmetry plane, so that both the transition between the horizontal part (2) of the pipe section and the first cylindrical surface (4) and the transition between the first and second cylindrical surfaces (4, 5) are tangential.

5.   A pipe section substantially as described above and with reference to the accompanying drawings.

Fig 1

Fig 2

Fig 3

0006266

# EUROPEAN SEARCH REPORT

European Patent Office

Application number

EP 79 200 290.9

| | DOCUMENTS CONSIDERED TO BE RELEVANT | | CLASSIFICATION OF THE APPLICATION (Int. Cl.²) |
|---|---|---|---|
| Category | Citation of document with indication, where appropriate, of relevant passages | Relevant to claim | |
| P | <u>DE - A - 2 713 840</u> (KOJIMA, NORIATSU)<br>* pages 1, 6, 7; fig. 1 *<br><br>-- | 1 | E 03 D 11/16 |
| A | <u>US - A - 3 263 244</u> (K. KATZ)<br>* fig. 1 *<br><br>-- | | |
| A | <u>DE - A - 2 536 849</u> (T.K. LARSSON)<br>* pages 6, 7 *<br><br>---- | | **TECHNICAL FIELDS SEARCHED (Int.Cl.²)**<br><br>E 03 C 1/12<br>E 03 D 11/00<br>F 16 L 43/00 |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| Berlin | 24-08-1979 | PAETZEL |

EPO Form 1503.1 06.78